(19) Europäisches Patentamt
European Patent Office
Office européen des brevets

(11) **EP 3 073 383 A1**

(12) **EUROPEAN PATENT APPLICATION**
published in accordance with Art. 153(4) EPC

(43) Date of publication:
**28.09.2016 Bulletin 2016/39**

(21) Application number: **14797086.7**

(22) Date of filing: **14.04.2014**

(51) Int Cl.:
***G06F 12/08*** (2006.01)

(86) International application number:
**PCT/CN2014/075259**

(87) International publication number:
**WO 2014/183514 (20.11.2014 Gazette 2014/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.11.2013 CN 201310586012**

(71) Applicant: **ZTE Corporation
Shenzhen, Guangdong 518057 (CN)**

(72) Inventor: **ZHOU, Yang
Shenzhen
Guangdong 518057 (CN)**

(74) Representative: **Regimbeau
20, rue de Chazelles
75847 Paris Cedex 17 (FR)**

(54) **METHOD, DEVICE, AND COMPUTER STORAGE MEDIUM FOR HIERARCHICAL STORAGE**

(57) The present disclosure discloses a hierarchical storage method and device. The method includes: triggering data migration based on a dynamic data staging policy; determining data to be migrated in accordance with a mutual association between files; and determining whether to migrate the data to be migrated based on a migration rate control mechanism. Meanwhile, the present disclosure further discloses a computer storage medium.

```
┌─────────────────────────────────────────────────────┐
│ Triggers data migration based on a dynamic data staging │ ╱ S102
│ policy                                                  │
└─────────────────────────────────────────────────────┘
                          │
                          ▼
┌─────────────────────────────────────────────────────┐
│ Determines data to be migrated based on a mutual        │ ╱ S104
│ association between files                                │
└─────────────────────────────────────────────────────┘
                          │
                          ▼
┌─────────────────────────────────────────────────────┐
│ Determines whether to migrate the data to be migrated based │ ╱ S106
│ on a migration rate control mechanism                   │
└─────────────────────────────────────────────────────┘
```

Figure 1

**Description**

Technical Field

The present disclosure relates to a field of computer storage systems, and particularly to a method, device, and a computer storage medium for hierarchical storage.

Background

Hierarchical storage management refers to a storage system, in which storage devices are physically distinguished into various categories in accordance with price, performance or other attributes, and data are dynamically migrated between different categories of storage devices in accordance with access actions thereof or other characteristics. Compared with a traditional storage system, a hierarchical storage system integrates devices having different performance, capacity and price together to provide a storage environment having high performance, large capacity and low price.

A general hierarchical storage system includes three stages, i.e. on-line storage, near-line storage and off-line storage. High-performance disks, such as SSD and FC disks, are used for the on-line storage. A small amount of data having a higher value and access frequency are stored in on-line storage devices, in comparison, these storage devices have good performance and fast access speed, and accessing data in the on-line storage devices may satisfy requirements of an application for high performance. Data not very active are stored in a near-line storage device, and an SATA disk is suitable to be used for the near-line storage due to larger capacity, lower price and lower performance. The near-line storage device has less influence on overall performance of the system due to less access to the near-line storage device by upper-layer applications. A tape or a tape library is generally used for an off-line storage device, which has a main purpose of storing backups of data or archived data in the on-line storage device and the near-line storage device. It always takes a long time to read off-line stored data, and off-line stored data would almost not be accessed.

An existing hierarchical storage system is primarily for a backup application (migrating cold data from the on-line storage device to the near-line or off-line storage device) or a caching application (migrating data getting hot in the near-line storage device to the on-line storage device to improve performance), but there are fewer designs taking account of both the backup application and caching application. These designs have a problem of lower performance due to reverse migration of data after data staging in the system. For example, some cold data having a low access frequency may be migrated from the on-line storage device to the near-line or off-line storage device during staging, and when the data are accessed once again, the existing system generally has two solutions including: (1) conducting reverse migration on the data in advance by prefetching, where this solution has a generally shorter predicted time and may have a problem of inaccuracy; and (2) triggering reverse migration of the data, where such reverse migration may be unnecessary because the data may be accessed just once and a cost of the reverse migration is high.

For a problem in a related art that data cannot be flexibly migrated between an on-line storage device and a near-line storage device using a hierarchical management method, an effective solution is not proposed at present yet.

Summary

For a problem in a related art that data cannot be flexibly migrated between an on-line storage device and a near-line storage device using a hierarchical management method, embodiments of the present disclosure provide a hierarchical storage method and device, and a computer storage medium for solving above technical problems.

In a first aspect, embodiments of the present disclosure provide a hierarchical storage method, including:

triggering data migration based on a dynamic data staging policy;
determining data to be migrated in accordance with a mutual association between files; and
determining whether to migrate the data to be migrated based on a migration rate control mechanism.

Preferably, triggering the data migration under different conditions based on the dynamic data staging policy, includes:

conducting a data staging operation based on the dynamic data staging policy, where the data staging operation includes a file upgrading operation and a file downgrading operation; and
triggering the data migration based on the data staging operation.

Preferably, conducting the file upgrading operation based on the dynamic data staging policy, includes:

measuring gain efficiency of the file upgrading according to an amount of data accessed in unit time after the file upgrading;

determining unit cost gain efficiency of data upgrading according to the gain efficiency of the file upgrading and a cost of the file upgrading;

judging whether an upgrading utility value of a file is greater than an upgrading threshold value according to the unit cost gain efficiency of data upgrading; and

executing the upgrading operation on the file if the upgrading utility value of the file is greater than the upgrading threshold value.

Preferably, conducting the file downgrading operation based on the dynamic data staging policy, includes:

maintaining all files in a quick storage device in a memory block LRU queue according to a data access situation;

taking out a coldest file from the LRU queue at designated intervals by a downgrading thread as an downgrading object; and

executing a file downgrading operation on the downgrading object.

Preferably, the method further includes: a step of associating files with each other based on a file association rule mining technology; and

the associating files with each other based on the file association rule mining technology, includes:

mining a frequent sequence using a mining algorithm BIDE;

converting the frequent sequence into an association rule, and determining a strong association rule;

judging whether the strong association rule is a redundant rule;

eliminating the strong association rule if the strong association rule is a redundant rule; and

reserving the strong association rule if the strong association rule is not a redundant rule;

where determining data to be migrated in accordance with the mutual association between files, includes:

determining the data to be migrated in accordance with the strong association rule between files.

Preferably, determining whether to migrate the data to be migrated based on the migration rate control mechanism, includes:

acquiring a load of a front-end application in a data management client;

conducting data migration if the load is lower than a first designated threshold value; and

limiting data migration if the load is greater than a second designated threshold value.

Preferably, when conducting the data migration, the method further includes:

determining a migration speed of the data migration in accordance with a length of an I/O access queue.

In a second aspect, embodiments of the present disclosure provide a hierarchical storage device, including:

a trigger module, configured to trigger data migration based on a dynamic data staging policy;

a to-be-migrated data determination module, configured to determine data to be migrated in accordance with a mutual association between files; and

a control module, configured to determine whether to migrate the data to be migrated based on a migration rate control mechanism.

Preferably, the trigger module includes:

a staging unit, configured to conduct a data staging operation based on the dynamic data staging policy, where the data staging operation includes a file upgrading operation and a file downgrading operation; and

a processing unit, configured to trigger data migration based on the data staging operation.

Preferably, the upgrading unit includes:

a first gain efficiency calculation subunit, configured to measure gain efficiency of the file upgrading according to an amount of data accessed in unit time after the file upgrading;

a second gain efficiency calculation subunit, configured to determine unit cost gain efficiency of data upgrading according to the gain efficiency of the file upgrading and a cost of the file upgrading; and

an upgrading operation subunit, configured to judge whether an upgrading utility value of a file is greater than an upgrading threshold value according to the unit cost gain efficiency of data upgrading, and execute the upgrading operation on the file if the upgrading utility value of the file is greater than the upgrading threshold value.

Preferably,the staging unit further includes:

a file maintenance subunit, configured to maintain all files in a quick storage device in a memory block LRU queue according to a data access situation;

a downgrading object determination subunit, configured to take out a coldest file from the LRU queue at designated intervals by a downgrading thread as an downgrading object; and

a downgrading operation subunit, configured to execute a file downgrading operation on the downgrading object.

Preferably, the device further includes an association module, the association module includes:

a frequent sequence mining unit, configured to mine a frequent sequence using a mining algorithm BIDE;

a strong association rule determination unit, configured to convert the frequent sequence into an association rule, and determine a strong association rule; and

a redundant rule judgement unit, configured to judge whether the strong association rule is a redundant rule, eliminate the strong association rule if the strong association rule is a redundant rule, and reserve the strong association rule if the strong association rule is not a redundant rule;

where the to-be-migrated data determination module is configured to determine data to be migrated in accordance with the strong association rule between files.

Preferably,the control module includes:

an acquisition unit, configured to acquire a load of a front-end application in a data management client to determine whether to migrate a file; and

a migration processing unit, configured to conduct data migration if the load is lower than a first designated threshold value, and limit data migration if the load is greater than a second designated threshold value.

Preferably,
the control module is further configured to determine a migration speed of the data migration in accordance with a length of an I/O access queue.

In a third aspect, the present disclosure provides a computer storage medium, in which a computer executable instruction is stored, where the computer executable instruction is used for executing any of above methods.

By means of embodiments of the present disclosure, the data migration is triggered based on the dynamic data staging policy; data to be migrated is determined based on the mutual association between files; and whether to migrate the data to be migrated is determined based on the migration rate control mechanism, thereby solving a problem in a related art that data cannot be flexibly migrated between an on-line storage device and a near-line storage device using a hierarchical management method, so that triggering of reverse migration can be controlled more flexibly, a hierarchical management policy can be flexibly configured, and data are flexibly migrated between an on-line storage device and a near-line storage device.

Description of the Drawings

Figure 1 is a flow diagram showing a hierarchical storage method provided according to embodiments of the present disclosure;

Figure 2 is a structural diagram showing a system hardware architecture provided according to embodiments of the present disclosure;

Figure 3 is a schematic diagram showing a rate control operation provided according to embodiments of the present disclosure; and

Figure 4 is a structural block diagram showing a hierarchical storage device provided according to embodiments of the present disclosure.

Detailed Description

Preferred embodiments of the present disclosure will be further described in detail with reference to the figures. It should be understood that the preferred embodiments described below are only used for describing and explaining the present disclosure, but are not used for limiting the present disclosure.

For solving a problem in an existing art that data cannot be flexibly migrated between an on-line storage device and a near-line storage device using a hierarchical management method, embodiments of the present disclosure provide a hierarchical storage method and device. The present disclosure will be further described in detail below in combination with the drawings and the embodiments. It should be understood that specific embodiments described herein are only used for explaining the present disclosure, but are not used for limiting the present disclosure.

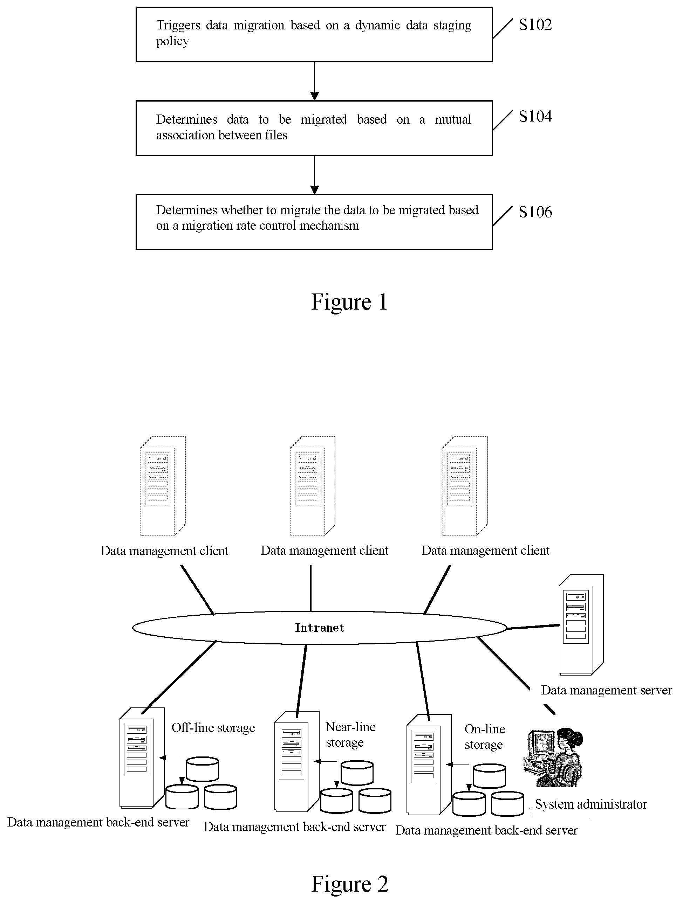

An embodiment provides a hierarchical storage method. Figure 1 is a flow diagram showing a hierarchical storage method according to embodiments of the present disclosure. As shown in Figure 1, the method includes following steps (S102 to S106).

S102, triggers data migration based on a dynamic data staging policy.

Specifically, conducts a data staging operation based on the dynamic data staging policy, where the data staging operation includes a file upgrading operation and a file downgrading operation; and triggers the data migration based on the data staging operation.

Conducting the file upgrading operation based on the dynamic data staging policy, includes:

measuring gain efficiency of the file upgrading according to an amount of data accessed in unit time after the file upgrading;
determining unit cost gain efficiency of data upgrading according to the gain efficiency of the file upgrading and a cost of the file upgrading;
judging whether an upgrading utility value of a file is greater than an upgrading threshold value according to the unit cost gain efficiency of data upgrading; and executing the upgrading operation on the file if the upgrading utility value of the file is greater than the upgrading threshold value.

Conducting the file downgrading operation based on the dynamic data staging policy, includes:

maintaining all files in a quick storage device in a memory block LRU queue according to a data access situation; taking out a coldest file from the LRU queue at designated intervals by a downgrading thread as an downgrading object; and executing a file downgrading operation on the downgrading object, where number of downgrading threads may be one or more. The LRU queue is a storage queue managed using a Least Recently Used algorithm.

S104, determines data to be migrated in accordance with a mutual association between files. Generally, there is a mutual association between files, and a user has a great chance to access file B while accessing file A in a storage device; the file A and the file B are already associated with each other according to a file association rule before S104 is executed; therefore, the file B can be migrated while migrating the file A; if the file A is previously migrated already, the file B is determined as a file to be migrated at current moment according to the mutual association between the file A and the file B so as to achieve automatic prefetching of files; and data in the file B to be migrated are data to be migrated. In a specific execution process, an establishment of the mutual association between files may be dynamically operated in real time in accordance with historical information of accessing or processing data, and may be cyclically operated as well.

The method further includes: a step of associating files with each other based on a file association rule mining technology, which is specifically as follows:

mining a frequent sequence using a mining algorithm BIDE; converting the frequent sequence into an association rule, and determining a strong association rule;
judging whether the strong association rule is a redundant rule;
eliminating the strong association rule if the strong association rule is a redundant rule; and
reserving the strong association rule if the strong association rule is not a redundant rule;

where in S104, a file to be migrated is determined in accordance with the strong association rule; and data included in the file to be migrated are data to be migrated.

S106, determines whether to migrate the data to be migrated based on a migration rate control mechanism.

S106 may specifically include:

acquiring a load of a front-end application in a data management client;

conducting data migration if the load is lower than a first designated threshold value; and

limiting data migration if the load is greater than a second designated threshold value.

In specific implementation, the first designated threshold value is generally less than the second designated threshold value. Both the first designated threshold value and the second designated threshold indicate corresponding load values.

Preferably, while executing S106, the method further includes:

when conducting the data migration, the method further includes:

determining a migration speed of the data migration in accordance with a length of an I/O access queue.

Generally, it indicates that a system currentlly has lots of tasks to process and the system is busy if the I/O access queue is long; and a heavy degree of tasks of the system is further increased if quick data migration is conducted, so that an I/O response is delayed, and user experience is poor. It indicates that the system currentlly has fewer tasks to process, and the system has much idle resources if the current I/O access queue is short, so that it is suitable for quick data migration. In this embodiment, a speed of data migration is determined according to a length of the I/O access queue, thereby optimizing a response of the system. In a specific implementation process, a maximum migration speed may also be determined according to urgency of current data migration, and in accordance with the length of the I/O access queue. The urgency of the data migration may be indicated by a priority; and confirmation of the priority may be determined in accordance with parameters such as a user instruction or an access frequency of data to be migrated.

By means of this embodiment, the data migration is triggered based on the dynamic data staging policy; data to be migrated are determined based on the mutual association between files; and whether to conduct the data migration is determined based on the migration rate control mechanism, thereby solving a problem in a related art that data cannot be flexibly migrated between an on-line storage device and a near-line storage device using a hierarchical management method, so that triggering of reverse migration can be controlled more flexibly, a hierarchical management policy can be flexibly configured, and data can be flexibly migrated between an on-line storage device and a near-line storage device.

The hierarchical storage method provided in this embodiment may also be referred as an automatic data migration method FlexMig (note: a name of the automatic data migration method), and FlexMig is mainly composed of following three parts:

(1) a dynamic data staging policy, based on which data migration under different conditions is triggered;
(2) a file association rule mining technology, based on which files associated with each other are used for automatic prefetching; and
(3) rate control in a migration process, based on which a reasonable balance is found between foreground I/O performance influence and data migration completion time limit.

The three parts are respectively described below in detail.

I. Data Migration Method FlexMig

Data staging evaluation in a dynamic data staging policy of FlexMig includes two parts, i.e. file upgrading evaluation and file downgrading evaluation.

FlexMig decides whether to execute an anupgrading operation on a file according to unit cost gain efficiency of data upgrading. Gain efficiency of file upgrading is measured by an amount of data accessed in unit time after file upgrading. A file access size and a file access frequency after file upgrading are respectively represented by AS and AF, and then performance gain efficiency after file upgrading is $AS \times AF$. a cost of file upgrading may be measured by a file size FS. Therefore, unit cost gain efficiency of data upgrading (i.e. a utility value) is calculated as $util = (AS \times AF)/FS$. If an upgrading utility value of a file is greater than an upgrading threshold value, then upgrade the file.

When an upgrade decision is given, only the file size FS is determined. In FlexMig, an average value of previous file access sizes is counted as an estimated value of a future access size AS. A value of AF is an average value of counted previous file access sizes. AS and AF may be fitted into more reasonable values by introducing a smoothing factor.

A downgrading algorithm of FlexMig has a basic idea that all files in a quick storage device are maintained in an LRU queue according to an access situation, a coldest file is taken out as an downgrading object from the LRU queue at regular intervals by a downgrading thread, and a time duration of the downgrading interval is related to a space idle rate of the quick storage device.

A data upgrading algorithm of FlexMig takes account of two indexes, i.e. a file access history and a file size, thereby making a cost required by file migration relatively low and ensuring that an I/O performance gain of a file which is obtained after migration is higher as well. A determination mode of the downgrading interval ensures that the quick storage device always has enough idle space. When a file stored in a slow storage device is accessed, a utility value of upgrading migration is calculated; and when a file stored in a quick storage device is accessed, a state of a corresponding LRU queue is updated. Little calculation overhead is added since there is no need for a dynamic data staging algorithm to periodically scan all files to conduct file value evaluation.

II. Associated File Mining Technology

In order to effectively achieve file prefetching, in FlexMig, a file association in a system is effectively recognized using a data mining technology. A file is mapped into an item, and an access sequence is mapped into a sequence in a sequence database by the data mining technology. A frequent subsequence indicates that associated files are frequently accessed together.

A file can be accessed in various modes, and can be executed in a process form in addition to opening and closing. In FlexMig, a long access trace is constructed by recording these system calls. In FlexMig, the long trace is cut into many short sequences using a simple cutting method. By means of FlexMig, a problem is converted into a frequent closed sequence mining problem, and a mining algorithm BIDE is used and is improved to a certain extent.

A BIDE algorithm has an essence of simultaneously constructing a frequent subtree, checking closure and conducting pruning in a depth-first mode. The BIDE algorithm achieves following two key tasks including: (1) closure checking; and (2) searching space pruning. The BIDE algorithm adopts a bidirectional extension pattern, in which a forward extension is used for closure checking of a prefix growth pattern and a prefix pattern, and in which a backward extension is used for closure checking of the prefix pattern and searching space pruning. For a current sequence, a local frequent item is found by forwardly scanning each mapping sequence using the BIDE algorithm. For each local frequent term, it is checked whether pruning can be conducted. If pruning cannot be conducted, the current sequence is forwardly extended.

In implementation of FlexMig, the BIDE algorithm is optimized in three aspects using a logic short-circuit principle as follows.

(1) During closure checking, the forward extension checking is firstly conducted since forward extension checking is easy to complete, and there is no need to conduct backward checking if a proposition that "no forward extension term exists" is false; (2) during each closure checking, there is already a conclusion that a backward extension term cannot be searched out in a half maximum segment group, and if a last item of a first example of the prefix sequence has a position as same as that of a last item of a last example, it can be judged that no backward extension term exists without checking a maximum segment; and (3) it can be judged that a backward extension term exists as long as determining that each sequence intersection in one of many maximum segment groups is not null.

In order to convert the frequent sequence into an association rule, in FlexMig, some rules are generated by each sequence. FlexMig specifies that a number of items on the right of a rule is 1 since it is enough for file prefetching. In order to limit a number of rules, in FlexMig, a number of items on the left of a rule is limited to be not greater than 2.

In FlexMig, a dependability degree of rules can be measured using a credibility parameter as well. Credibility of a rule $a{\to}b$ can be calculated by a following formula: $conf(a{\to}b)=sup(ab)/sup(a)$, where the $sup(a)$ and $sup(ab)$ respectively represent a support degree of sequence $a$ and sequence $ab$. When a future access is predicted using an association rule, credibility of the rule indicates prediction accuracy. In FlexMig, a low-quality association rule is filtered using a minimum credibility threshold value, and remaining rules are referred as strong association rules.

Maintenance and search costs are increased due to an existence of a serious redundancy phenomenon when these strong association rules are directly used for file prefetching. A rule having an antecedent length of L is referred as an "L-rule". For a 2-rule $xy{\to}z$, in FlexMig, it is judged whether the 2-rule is a redundant rule by checking whether there is a 1-rule $a{\to}b$ simultaneously satisfying following conditions including: (1) b=z, that is, there is a same consequent; and (2) a=x or a=y, that is, an antecedent of the 1-rule is as same as a certain term in antecedents of the 2-rule. By means of FlexMig, once a redundant rule is detected, the redundant rule is deleted from a rule set, and remaining non-redundant strong association rules can be directly used for file prefetching. Prefetching files which are associated with a file to be upgraded can reduce access delay to these files. However, there is a common concern on whether data prefetching influences performance of normal data upgrading. In FlexMig, influence on performance caused by file prefetching is avoided using two methods. Associated small file groups are centralized and stored in a low-stage device and are prefetched in an upgrade piggybacking mode. For larger associated files, it is ensured to execute data prefetching when a foreground load is lighter using a rate control mechanism described below.

III. Migration Rate Control

Figure 2 is a structural diagram showing a system hardware architecture according to embodiments of the present disclosure. As shown in Figure 2, data management clients, a data management server, data management back-end servers and a system administrator are connected by an internal network (Intranet), and the data management back-end servers are respectively used for on-line storage, near-line storage and off-line storage. This system executes different management operations such as data migration, data backup, data compression and the like in accordance with an established policy, where the data migration and the data backup need to access files in a main storage pool and store data in a low-level storage pool through a network. Since a data management operation is executed on line, the migration of data and a front-end application will share, apply and compete for I/O and network resources in the data management clients. This system provides a rate control mechanism to maximize a data migration speed without influencing performance of the front-end application.

Since an I/O access load in the storage system has nondeterminacy, this system adjusts the data migration speed using two states, i.e. a logically on/off state. Whether to conduct file migration is determined in accordance with a load of the front-end application in the data management client. The data migration is conducted if the load of the front-end application is relatively low, and the file migration is limited if the load of the front-end is too high.

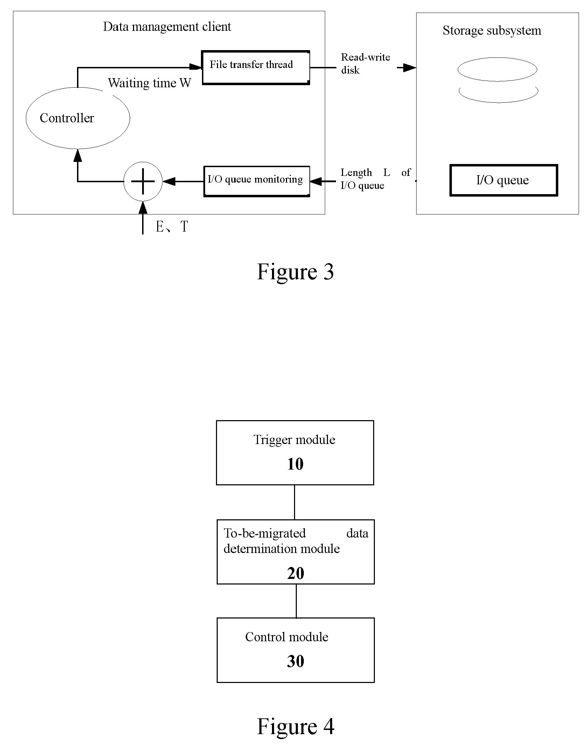

This system monitors a length of an I/O queue in the data management client. In a schematic diagram showing a rate control operation according to embodiments of the present disclosure as shown in Figure 3, when the length of the I/O queue is greater than a set threshold value T, it is decided that a front-end load is high. Generally, an I/O response time increases with increasement of the length of the I/O queue. This system obtains a time length W that data migration should wait for through calculation by a formula. A calculation formula of the W is shown as follows:

is shown as follows:

$$W = E \times (L\text{-}T), \text{ where the E is a constant, the L is a length of an I/O queue,}$$

where the E is a constant, the L is a length of an I/O queue, and the T is a set threshold value. Values of the E and T are obtained in accordance with empirical values.

With respect to the hierarchical storage method described in above embodiments, this embodiment provides a hierarchical storage device for achieving above embodiments. Figure 4 is a structural block diagram showing a hierarchical storage device according to embodiments of the present disclosure. As shown in Figure 4, the device includes a trigger module 10, a to-be-migrated data determination module 20 and a control module 30. The structure is described below in detail.

The trigger module 10 is configured to trigger data migration based on a dynamic data staging policy.

Preferably, the trigger module includes:

a staging unit, configured to conduct a data staging operation based on the dynamic data staging policy, where the data staging operation includes a file upgrading operation and a file downgrading operation; and
a processing unit, configured to trigger the data migration based on the data staging operation.

The staging unit may include:

a first gain efficiency calculation subunit, configured to measure gain efficiency of the file upgrading according to an amount of data accessed in unit time after the file upgrading;
a second gain efficiency calculation subunit, configured to determine unit cost gain efficiency of data upgrading according to the gain efficiency of the file upgrading and a cost of the file upgrading; and an upgrading operation subunit, used for judging whether an upgrading utility value of a file is greater than an upgrading threshold value according to the unit cost gain efficiency of data upgrading, and executing the upgrading operation on the file if the upgrading utility value of the file is greater than the upgrading threshold value.

Preferably, the staging unit further includes:

a file maintenance subunit, configured to maintain all files in a quick storage device in a memory block LRU queue according to a data access situation;
a downgrading object determination subunit, configured to take out a coldest file from the LRU queue at designated intervals by a downgrading thread as an downgrading object; and a downgrading operation subunit, used for executing a file downgrading operation on the downgrading object.

The to-be-migrated data determination module 20 is configured to determine data to be migrated in accordance with a mutual association between files.

The device further includes an association module, configured to associate files with each other based on a file association rule mining technology, where the files associated with each other are used for automatic prefetching.

Specifically, the association module may include:

a frequent sequence mining unit, configured to mine a frequent sequence using a mining algorithm BIDE;

a strong association rule determination unit, configured to convert the frequent sequence into an association rule, and determine a strong association rule; and

a redundant rule judgement unit, configured to judge whether the strong association rule is a redundant rule, eliminate the strong association rule if the strong association rule is a redundant rule, and reserve the strong association rule if the strong association rule is not a redundant rule;

where the to-be-migrated data determination module 20 determines data to be migrated in accordance with the strong association rule.

The control module 30 is configured to determine whether to migrate the data to be migrated based on a migration rate control mechanism.

Preferably, the control module 30 may include:

a migration unit, configured to acquire a load of a front-end application in a data management client; and

a migration processing unit, configured to conduct data migration if the load is lower than a first designated threshold value, and limit data migration if the load is greater than a second designated threshold value. In specific implementation, the first designated threshold value is generally less than the second designated threshold value. Both the first designated threshold value and the second designated threshold indicate corresponding load values.

The control module 30 is further configured to determine a migration speed of the data migration in accordance with a length of an I/O access queue. The control module may be specifically configured to obtain a time length W that data migration should wait for through calculation by a formula. A calculation formula of the W is shown as follows:

formula of the W is shown as follows:

$$W = E \times (L-T), \text{ where the E is a constant, the L is a length of an I/O queue,}$$

where the E is a constant, the L is a length of an I/O queue, and the T is a set threshold value. Values of the E and T may be obtained in accordance with empirical values. In a specific operation, a migration speed may be maximized as required.

Specific structures of the trigger module 10, the to-be-migrated data determination module 20 and the control module 30 in embodiments of the present disclosure can correspond to a storage medium and a memory; an executable instruction is stored in the storage medium; and the processor is connected to the storage medium in connection modes of a bus or a communication interface, etc., and can execute functions corresponding to various modules by operating the executable instruction. The trigger module 10, the to-be-migrated data determination module 20 and the control module 30 can respectively correspond to different processors, and can be integrated to be corresponding to a same processor as well. The processor can be an electronic component having a processing function such as a central processing unit, a microprocessor, a single chip microcomputer, a digital signal processor or a programmable array, etc. The device in this embodiment further includes at least one external communication interface which is respectively connected to the storage medium and the processor and is configured as a communication bridge of data interaction between the storage medium, the processor and a peripheral, for example, for receiving data access from a user equipment. The communication interface may be a wired communication interface such as RJ45, a coaxial cable connection interface or an optical fiber connection interface, etc. The communication interface may also be a wireless communications interface such as a transceiving antenna or a transceiving antenna array, etc.

By means of this embodiment, the trigger module 10 decides triggering of data migration under different conditions based on a dynamic data staging policy; the to-be-migrated data determination module 20 determines data to be migrated based on a mutual association between files; and the control module 30 determines a migration speed and whether to conduct data migration based on a migration rate control mechanism, thereby solving a problem in a related art that data cannot be flexibly migrated between an on-line storage device and a near-line storage device using a hierarchical management method, so that triggering of reverse migration can be controlled more flexibly, a hierarchical management policy can be flexibly configured, and data are flexibly migrated between an on-line storage device and a near-line storage device.

It can be seen from the above description that, by means of technical solutions of the present disclosure, the triggering of reverse migration can be controlled more flexibly, the hierarchical management policy can be flexibly configured, and data are flexibly migrated between an on-line storage device and a near-line storage device.

Although the preferred embodiments of the present disclosure are already disclosed for an exemplary purpose, those skilled in the art shall understand that various modifications, additions and substitutions are possible. Accordingly, the scope of the present disclosure is not limited to the above embodiments.

Embodiments of the present disclosure further provide a computer storage medium, in which a computer executable instruction is stored, where the computer executable instruction is used for executing a method in any of technical solutions in the above hierarchical storage method.

The executable instruction may be a computer recognizable instruction, such as an executable instruction formed by machine languages based on 0 and 1, and an instruction or an instruction set based on high-level languages such as a C, java or C# language, etc. The storage medium is preferably a non-instantaneous storage medium such as a compact disc, a flash disc, a disk, etc.

The above only describes preferred embodiments of the present disclosure and is not intended to limit the protection scope of the present disclosure. Therefore, all modifications made according to the principle of the present disclosure should be understood to be fallen into the protection scope of the present disclosure.

## Claims

1. A hierarchical storage method, comprising:

    triggering data migration based on a dynamic data staging policy;
    determining data to be migrated in accordance with a mutual association between files; and
    determining whether to migrate the data to be migrated based on a migration rate control mechanism.

2. The method of claim 1, wherein triggering the data migration under different conditions based on the dynamic data staging policy, comprises:

    conducting a data staging operation based on the dynamic data staging policy, wherein the data staging operation comprises a file upgrading operation and a file downgrading operation; and
    triggering the data migration based on the data staging operation.

3. The method of claim 2, wherein conducting the file upgrading operation based on the dynamic data staging policy, comprises:

    measuring gain efficiency of the file upgrading according to an amount of data accessed in unit time after the file upgrading;
    determining unit cost gain efficiency of data upgrading according to the gain efficiency of the file upgrading and a cost of the file upgrading;
    judging whether an upgrading utility value of a file is greater than an upgrading threshold value according to the unit cost gain efficiency of data upgrading; and
    executing the upgrading operation on the file if the upgrading utility value of the file is greater than the upgrading threshold value.

4. The method of claim 2, wherein conducting the file downgrading operation based on the dynamic data staging policy, comprises:

    maintaining all files in a quick storage device in a memory block LRU queue according to a data access situation;
    taking out a coldest file from the LRU queue at designated intervals by a downgrading thread as an downgrading object; and
    executing a file downgrading operation on the downgrading object.

5. The method of claim 1, further comprising: a step of associating files with each other based on a file association rule mining technology; and
the associating files with each other based on the file association rule mining technology, comprises:

mining a frequent sequence using a mining algorithm BIDE;
converting the frequent sequence into an association rule, and determining a strong association rule;
judging whether the strong association rule is a redundant rule;
eliminating the strong association rule if the strong association rule is a redundant rule; and
reserving the strong association rule if the strong association rule is not a redundant rule;

wherein determining data to be migrated in accordance with the mutual association between files, comprises:
determining the data to be migrated in accordance with the strong association rule between files.

6. The method of claim 1, wherein determining whether to migrate the data to be migrated based on the migration rate control mechanism, comprises:

acquiring a load of a front-end application in a data management client;
conducting data migration if the load is lower than a first designated threshold value; and
limiting data migration if the load is greater than a second designated threshold value.

7. The method of claim 6, wherein when conducting the data migration, further comprising:

determining a migration speed of the data migration in accordance with a length of an I/O access queue.

8. A hierarchical storage device, comprising:

a trigger module, configured to trigger data migration based on a dynamic data staging policy;
a to-be-migrated data determination module, configured to determine data to be migrated in accordance with a mutual association between files; and
a control module, configured to determine whether to migrate the data to be migrated based on a migration rate control mechanism.

9. The device of claim 7, wherein the trigger module comprises:

a staging unit, configured to conduct a data staging operation based on the dynamic data staging policy, wherein the data staging operation comprises a file upgrading operation and a file downgrading operation; and
a processing unit, configured to trigger data migration based on the data staging operation.

10. The device of claim 9, wherein the upgrading unit comprises:

a first gain efficiency calculation subunit, configured to measure gain efficiency of the file upgrading according to an amount of data accessed in unit time after the file upgrading;
a second gain efficiency calculation subunit, configured to determine unit cost gain efficiency of data upgrading according to the gain efficiency of the file upgrading and a cost of the file upgrading; and
an upgrading operation subunit, configured to judge whether an upgrading utility value of a file is greater than an upgrading threshold value according to the unit cost gain efficiency of data upgrading, and execute the upgrading operation on the file if the upgrading utility value of the file is greater than the upgrading threshold value.

11. The device of claim 9, wherein the staging unit further comprises:

a file maintenance subunit, configured to maintain all files in a quick storage device in a memory block LRU queue according to a data access situation;
a downgrading object determination subunit, configured to take out a coldest file from the LRU queue at designated intervals by a downgrading thread as an downgrading object; and
a downgrading operation subunit, configured to execute a file downgrading operation on the downgrading object.

12. The device of claim 8, further comprising an association module,
the association module comprises:

a frequent sequence mining unit, configured to mine a frequent sequence using a mining algorithm BIDE;
a strong association rule determination unit, configured to convert the frequent sequence into an association rule, and determine a strong association rule; and

a redundant rule judgement unit, configured to judge whether the strong association rule is a redundant rule, eliminate the strong association rule if the strong association rule is a redundant rule, and reserve the strong association rule if the strong association rule is not a redundant rule;

wherein the to-be-migrated data determination module is configured to determine data to be migrated in accordance with the strong association rule between files.

13. The device of claim 8, wherein the control module comprises:

an acquisition unit, configured to acquire a load of a front-end application in a data management client to determine whether to migrate a file; and
a migration processing unit, configured to conduct data migration if the load is lower than a first designated threshold value, and limit data migration if the load is greater than a second designated threshold value.

14. The device of claim 13, wherein
the control module is further configured to determine a migration speed of the data migration in accordance with a length of an I/O access queue.

15. A computer storage medium, in which a computer executable instruction is stored, wherein the computer executable instruction is used for executing the method of any of claims 1-7.

| Triggers data migration based on a dynamic data staging policy | S102 |
| Determines data to be migrated based on a mutual association between files | S104 |
| Determines whether to migrate the data to be migrated based on a migration rate control mechanism | S106 |

Figure 1

Figure 2

Figure 3

Figure 4

# INTERNATIONAL SEARCH REPORT

International application No.

**PCT/CN2014/075259**

## A. CLASSIFICATION OF SUBJECT MATTER

G06F 12/08 (2006.01) i

According to International Patent Classification (IPC) or to both national classification and IPC

## B. FIELDS SEARCHED

Minimum documentation searched (classification system followed by classification symbols)

G06F, H04L

Documentation searched other than minimum documentation to the extent that such documents are included in the fields searched

Electronic data base consulted during the international search (name of data base and, where practicable, search terms used)

CNPAT, CNKI, WPI, EPODOC: hierarchical, bodystructure, near-line, LRU, cold data, data, storage, migration, online, outline, hot, cold

## C. DOCUMENTS CONSIDERED TO BE RELEVANT

| Category* | Citation of document, with indication, where appropriate, of the relevant passages | Relevant to claim No. |
|---|---|---|
| Y | CN 102521138 A (HUAWEI SYMANTEC TECHNOLOGIES CO., LTD.), 27 June 2012 (27.06.2012), see paragraphs 0005-0012 | 1-2, 4, 6-9, 11, 13-14, 15 |
| Y | CN 103106047 A (INSPUR (BEIJING) ELECTRONIC INFORMATION INDUSTRY CO., LTD.), 15 May 2013 (15.05.2013), see paragraphs 0017-0019 and 0038 | 1-2, 4, 6-9, 11, 13-14, 15 |
| Y | CN 103078933 A (SHENZHEN INSTITUTES OF ADVANCED TECHNOLOGY), 01 May 2013 (01.05.2013), see paragraphs 0018-0023 | 1-2, 4, 6-9, 11, 13-14, 15 |
| A | CN 102882928 A (INSPUR ELECTRONIC INFORMATION INDUSTRY CO., LTD.), 16 January 2013 (16.01.2013), the whole document | 1-15 |
| A | US 2013046920 A1 (SAMSUNG ELECTRONICS CO., LTD.), 21 February 2013 (21.02.2013), the whole document | 1-15 |

☐ Further documents are listed in the continuation of Box C.  ☒ See patent family annex.

| | |
|---|---|
| \* Special categories of cited documents:<br><br>"A" document defining the general state of the art which is not considered to be of particular relevance<br><br>"E" earlier application or patent but published on or after the international filing date<br><br>"L" document which may throw doubts on priority claim(s) or which is cited to establish the publication date of another citation or other special reason (as specified)<br><br>"O" document referring to an oral disclosure, use, exhibition or other means<br><br>"P" document published prior to the international filing date but later than the priority date claimed | "T" later document published after the international filing date or priority date and not in conflict with the application but cited to understand the principle or theory underlying the invention<br><br>"X" document of particular relevance; the claimed invention cannot be considered novel or cannot be considered to involve an inventive step when the document is taken alone<br><br>"Y" document of particular relevance; the claimed invention cannot be considered to involve an inventive step when the document is combined with one or more other such documents, such combination being obvious to a person skilled in the art<br><br>"&" document member of the same patent family |
| Date of the actual completion of the international search<br><br>06 August 2014 (06.08.2014) | Date of mailing of the international search report<br><br>**22 August 2014 (22.08.2014)** |
| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**LIN, Songling**<br><br>Telephone No.: (86-10) **61648099** |

Form PCT/ISA/210 (second sheet) (July 2009)

## INTERNATIONAL SEARCH REPORT
### Information on patent family members

| | International application No. |
|---|---|
| | **PCT/CN2014/075259** |

| Patent Documents referred in the Report | Publication Date | Patent Family | Publication Date |
|---|---|---|---|
| CN 102521138 A | 27.06.2012 | EP 2717167 A1 | 09.04.2014 |
| | | WO 2013078879 A1 | 06.06.2013 |
| | | US 2013179635 A1 | 11.07.2013 |
| CN 103106047 A | 15.05.2013 | None | |
| CN 103078933 A | 01.05.2013 | None | |
| CN 102882928 A | 16.01.2013 | None | |
| US 2013046920 A1 | 21.02.2013 | KR 20130019567 A | 27.02.2013 |

Form PCT/ISA/210 (patent family annex) (July 2009)